# EUROPÄISCHE PATENTSCHRIFT

(11) **EP 1 016 288 B1**
(45) Veröffentlichungstag und Bekanntmachung des Hinweises auf die Patenterteilung: **09.01.2002**
(21) Anmeldenummer: 98949947.0
(22) Anmeldetag: 21.08.1998
(51) Int. Cl.: H04N 13/04

(54) **VORRICHTUNG ZUM NACHFÜHREN EINES AUTOSTEREOSKOPISCHEN FLACHBILDSCHIRMS**
DEVICE FOR AUTOMATICALLY TRACKING AN AUTOSTEREOSCOPIC FLAT SCREEN
DISPOSITIF D'ORIENTATION AUTOMATIQUE D'UN ECRAN PLAT AUTOSTEREOSCOPIQUE

(30) Priorität: 22.08.1997 DE 19737449
(43) Veröffentlichungstag der Anmeldung: 05.07.2000
(73) Patentinhaber: Heinrich-Hertz-Institut für Nachrichtentechnik Berlin GmbH, 10587 Berlin (DE)
(72) Erfinder: BÖRNER, Reinhard, D-10719 Berlin (DE)
(74) Vertreter: Rudolph, Margit
(86) Internationale Anmeldenummer: DE9802576
(87) Internationale Veröffentlichungsnummer: WO9911074

(56) Entgegenhaltungen:
- EP-A- 0 702 494
- WO-A-96/22660

## Beschreibung

Die Erfindung betrifft eine Vorrichtung zum Nachführen eines autostereoskopischen Flachbildschirms, aufweisend einen Flachildschirm, ein Detektionssystem, das die Kopfposition des Betrachters in Bezug auf die Flachbildschirmebene bestimmt, einen Regler, der die gemessenen Daten verarbeitet, und mindestens einen Antrieb, auf den der Regler diese Daten überträgt und der den Flachbildschirm den Kopfbewegungen des Betrachters nachführt.

Bei der autostereoskopischen Bildwiedergabe ist die Betrachtung von typischerweise gerasterten und zusammengefügten oder von den Bildschirmen selbst zerrasterten Stereobildern mit Linsen- oder Streifenraster-Bildschirm nur in kleinen Betrachtungszonen möglich. Diese Zonen sind trapezoid in horizontaler Ausrichtung. Befindet sich der Betrachter außerhalb dieser Zonen, treten Bildstörungen auf, da die notwendige Bildtrennung der Stereoteilbilder für das rechte und das linke Auge verlorengeht.

Um die Bereiche für den Betrachter zu erweitern, in denen eine Bildtrennung der linken und der rechten Stereoteilbilder gewährleistet ist, sind Trackingverfahren vorgeschlagen worden, bei denen beispielsweise Projektorpaare oder die dem Zuschauer zugewandte Rasterscheibe der Bewegung des Betrachters nachgeführt werden. Wird hierbei als Flachbildschirm ein LCD (Flüssigkristall-Anzeige) verwendet, wird der laterale Trackbereich beim Linsenraster-Tracking dadurch eingegrenzt, daß sich die optischen Abbildungen der Linsen des Rasters bei frontaler und lateraler Bewegung verschlechtern. Das "Matching" (die optisch-geometrische Zuordnung) der Pixel- und Linsenraster ist bei feinen Strukturen sehr problematisch. Auch die Ausbildung eines 3D-Monitors auf der Grundlage von Flachdisplays mit getracktem Linsenraster ist bekannt. Das mit den erwähnten Lösungen realisierte laterale Tracking erlaubt weiträumige Betrachterbewegungen. Nur die letztgenannte Lösung, die Ausbildung eines 3D-Monitors aus Flachbild-Anzeigemodul, im weiteren auch als Flachdisplay bezeichnet, mit getracktem Linsenraster, ermöglicht auch ein frontales Tracking, das durch die Veränderung der Gegenstandsweite des Linsenrasters erreicht wird. Die hiermit einhergehende Änderung der Bildweite begrenzt jedoch den frontalen Trackbereich, denn durch unscharfe Abbildung der Pixel am Betrachterort entsteht Übersprechen. Außerdem begrenzt die rückseitige Schnittweite des Linsenrasters das Tracking im Nahbereich, aber auch der Luftspalt selbst, wenn sein Wert 0 ist und die Display-Scheibe z.B. recht dick ist.

Wie beim natürlichen Sehen sollen bei Bewegungen eines Betrachters vor dem 3D-Monitor wechselnde Ansichten sichtbar werden. Nur dann können statisch wiedergegebene Objekte bei Betrachterbewegungen unverzerrt wiedergegeben werden. Stehen viele perspektivische Ansichten zur Verfügung, könnte man auch seitliche Ansichten der Objekte erhalten. Steht jedoch nur eine perspektivische Stereoansicht zur Verfügung oder sollen bei statischer Betrachterposition die gedrehten Ansichten durch Aufruf dargestellt werden, so treten bei Kopfbewegungen windschiefe Objektverzeichnungen auf. Diese können nur vermieden werden, wenn der Bildschirm nachgeführt wird.

Eine Vorrichtung, mit der ein kleiner Flachbildschirm der Bewegung des Betrachters nachgeführt wird, ist in SPIE, Vol. 2409, 1995, Seiten 6 bis 9 beschrieben. Diese Vorrichtung weist ein Infrarot-Kopf-Detektionssystem auf, das die Kopfposition des Betrachters lateral zum Bildschirm bestimmt. Zunächst wurde das Linsenraster bezüglich des LCD-Schirms mittels eines piezo-elektrischen Stellgliedes oder eines Miniatur-Schrittmolors um 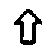 2 mm verstellt. Damit konnte der Betrachter eine Position in eine zweite verändern. Wesentlich günstiger erwies sich eine andere Lösung, nämlich nunmehr den gesamten Flachbildschirm, d.h. Linsenraster und LCD-Flachbild-Anzeigemodul, mittels eines Schrittmotors zu drehen, so daß ein größerer Bereich gebildet wird, in dem der Betrachter, der sich üblicherweise während einer Video-Telefon-Übertragung nicht weiter als ± 250 mm von seiner Ausgangsposition und nicht schneller als 1,35 m/s bewegt, ein korrektes Bild wahrnehmen kann. Die zuletzt genannte Vorrichtung zur Drehung des gesamten Monitors erlaubt nur ein laterales Nachführen, wodurch der Bewegungsspielraum des Betrachters bezüglich des Abstandes doch wieder sehr eingeschränkt ist.

Deshalb ist es Aufgabe der Erfindung, eine Vorrichtung anzugeben, die sowohl ein laterales als auch ein frontales Nachführen eines autostereoskopischen Flachbildschirms bezüglich der Bewegung des Betrachters ermöglicht und damit einen größeren Betrachtungsbereich erlaubt. Außerdem soll die Vorrichtung in diesem größeren Betrachtungsbereich die beschriebenen Bildstörungen vermeiden.

Erfindungsgemäß wird die Aufgabe durch eine Vorrichtung der eingangs genannten Art dadurch gelöst, daß der Flachbildschirm als Einheit aus einem Linsenraster mit extrem kleinen Linsenpitches von optimal korrigierter Linsenstruktur und einem Flachbild-Anzeigemodul gebildet ist und der Antrieb zum Nachführen des Flachbildschirms ein mehrstufiges Gelenkgetriebe ist, das translatorische und/oder rotatorische Bewegungen ausführt und den Fiachbiidschirm bei einer Kopfbewegung des Betrachters in konstanter Betrachtungsentfernung und konstantem Betrachtungswinkel nachführt.

Die erfindungsgemäße Vorrichtung gewährleistet durch das definierte Nachführen des Bildschirms bei Beibehaltung eines konstanten Abstands und unter konstanter Ausrichtung einen Einblick in den Bildschirm immer senkrecht zur Bildschirmebene, d.h. stets aus zentraler Position, wodurch Bildstörungen vermieden werden. Aufgrund dieser zentralen Position des Betrachters bezüglich des Bildschirms, die durch das Nachführen des Bildschirms garantiert ist, kann eine optimal an eine hohe Bildauflösung angepaßte Linsenstruktur gewählt werden.

Ein derartig nachgeführter Stereo-Monitor ist für spezielle Anwendungen, z.B. wenn nur eine bestimmte Stereoansicht präzise interpretiert werden soll, besonders attraktiv, wobei zusätzlich - wie bereits erwähnt - wegen des konstanten Betrachtungsabstandes die Bildauflösung immer optimal bleibt. Dieser nachgeführte 3D-Stereo-Monitor mit höchster Auflösung und korrekter Perspektive ist für verschiedene Einsatzgebiete, wie z.B. in Simulatoren (Maschine, Fluggerät, Schiff, Fahrzeug), in Leitwanen (Flugsicherung, Fabrikationsüberwachung), in der Kommunikation (Multimedia, Bildtelefon, Landkarten, Luftbild), in der Medizin (Mikrochirurgie, Röntgen, Ultraschall, Tomographie), in der Werbung (Schaukasten, Diorama, Werbefläche) und für Arbeitsplatz-Computer (Laptop, Navigation, CAD/CAM, Flugüberwachung, Video Conferencing) sowie für Game Machines in Spielhallen und als Handgerät geeignet.

Ausgestaltungen der Erfindung betreffen zunächst die Ausführungen der Gelenkglieder.

Zwei rotatorische Bewegungen in einer horizontalen Ebene zum Nachführen des Flachbildschirms unter Beibehaltung des Abstandes und der Ausrichtung des Betrachters zum Schirm, damit sich der Betrachter immer in der Betrachtungszone befindet, sind durch Gelenkglieder, die einen eingliedrigen horizontalen Schwenkarm mit zwei Drehgelenken aufweisen, wobei ein Drehgelenk den horizontalen Schwenkarm mit dem Flachbildschirm und das andere Drehgelenk eine um 180° bezüglich des Flachbildschirms versetzt angeordnete Grundplatte mit dem horizontalen Schwenkarm drehbar verbindet. realisiert.

Für drei rotatorische Bewegungen in einer horizontalen Ebene zum Nachführen des Flachbildschirms sind die Gelenkglieder als zweigliedriger horizontaler Schwenkarm mit drei Drehgelenken ausgebildet, wobei die beiden äußeren die - wie bei dem eingliedrigen Schwenkarm - bereits beschriebenen Bewegungen ausführen und das mittlere Drehgelenk die beiden Glieder des horizontalen Schwenkarms drehbar miteinander verbindet.

Die folgende Ausführungsform gestattet drei Drehbewegungen in zwei zueinander senkrechten Ebenen. Auch mit dieser Ausführungsform, bei der das Getriebegelenk als Gelenkglieder ein Paar vertikaler, eingliedriger, parallel zueinander angeordneter Schwenkarme aufweist, wobei je ein Ende der beiden Schwenkarme mit je einer Seitenfläche des Flachbildschirms drehbar verbunden ist und das jeweils andere der Enden des Paares vertikaler Schwenkarme mit einer drehbar ausgebildeten, horizontal angeordneten, scheibenförmigen Grundplatte drehbar verbunden ist. Diese "Aufhängung" des Flachbildschirms zwischen die vertikalen Schwenkarme garantiert immer eine senkrechte Anordnung des Schirms. Diese Ausführungsform der Erfindung kann auf einem Tisch "stehend" oder an der Decke "hängend" betrieben werde.

In einer anderen Ausgestaltung ist auf einer als Schubgelenk ausgebildeten horizontal angeordneten Schiene der Flachbildschirm drehbar angeordnet. Damit ist es möglich, mit dem Schirm eine translatorische und eine rotatorische Bewegung in der horizontalen Ebene zu realisieren.

Mit der folgenden Ausführungsform wird im Vergleich zu der zuvor beschriebenen eine weitere translatorische Bewegung, die senkrecht zu der ersten verläuft, realisiert. Hierbei weist das Gelenkgetriebe als Gelenkglieder ein Paar als Schubgelenk horizontal und parallel zueinander angeordneter Schienen auf, senkrecht zu diesem Paar Schienen ist eine als Schubgelenk ausgebildete Einzelschiene ausgebildet, in der der Flachbildschirm drehbar angeordnet ist. Damit kann der Flachbildschirm in der horizontalen Ebene zwei translatorische - ähnlich einem x-y-Tisch - und eine rotatorische Bewegung ausführen.

Da jede der genannten Ausführungsformen der Erfindung das Nachführen des Flachbildschirms unter Beibehaltung eines konstanten Abstands und einer konstanten Ausrichtung des Betrachters zum Flachbildschirm garantiert, wird mit der erfindungsgemäßen Vorrichtung der mögliche Bereich, in dem sich der Betrachter bewegen kann, durch Nachführen der trapezoidförmigen Betrachtungszone, in der die erforderliche Bildtrennung der Stereoteilbilder für das rechte und das linke Auge gewährleistet ist, vergrößert.

Andere Ausführungsformen beziehen sich auf das Flachbild-Anzeigemodul und die Anordnung des Linsenrasters. So ist vorgesehen, daß das Flachbild-Anzeigemodul ein Flüssigkristall-, Elektrolumineszenz- oder Plasmadisplay ist. Das Linsenraster kann direkt auf dem Flachbild-Anzeigemodul oder mit der strukturierten Fläche zum Flachbild-Anzeigemodul hin bzw. zum Betrachter hin angeordnet sein.

In einer weiteren Ausgestaltung der Erfindung führt das mehrstufige Gelenkgetriebe den Flachbildschirm bei Bewegung des Betrachters in konstantem Betrachtungsabstand nach und das Linsenraster ist derart ausgebildet ist, daß es zusätzlich bei seitlicher Bewegung parallel (lateral) zum Flachbild-Anzeigemodul verfahren wird. Mit dieser Ausgestaltung wird eine Kombination aus Display- und Rasterplatten-Tracking realisiert.

Weitere Einzelheiten der Erfindung und ihrer vorteilhaften Ausführungsformen werden im Zusammenhang mit der folgenden Beschreibung der Figuren näher erläutert.

Dabei zeigen:
- Fig. 1: eine schematische Ansicht eines Flachbilddisplays mit Linsenraster, angeordnet auf einem eingliedrigen horizontalen Schwenkarm mit zwei Drehgelenken;
- Fig. 2: schematisch die erforderlichen Bewegungsabläufe der Vorrichtung gemäß Fig. 1;
- Fig. 3: schematisch den in Abhängigkeit der Stellung des Flachbildschirms entstehenden möglichen Bewegungsbereich des Betrachters, in dem die trapezoidförmige Betrachtungszone gemäß Fig. 1 nachgeführt ist;
- Fig. 4: schematisch die möglichen Bewegungsabläufe eines Flachbildschirms, angeordnet auf einem zweigliedrigen horizontalen Schwenkarm mit drei Drehgelenken;
- Fig. 5: schematisch eine Ausführungsform, bei der der Flachbildschirm zwischen einem Paar vertikaler, eingliedriger, paralleler Schwenkarme, die mit einer drehbaren horizontalen Basisplatte verbunden sind, drehbar angeordnet ist;
- Fig. 6: schematisch den frontalen Schwenkbereich des gemäß Fig. 5 angeordneten Flachbildschirms in Seitenansicht;
- Fig. 7: schematisch die möglichen Bewegungsabläufe eines Flachbildschirms, drehbar angeordnet auf einer horizontalen Schiene;
- Fig. 8: schematisch die möglichen Bewegungsabläufe eines Flachbildschirms, drehbar angeordnet auf senkrecht zueinander befindlichen horizontalen Schienen.

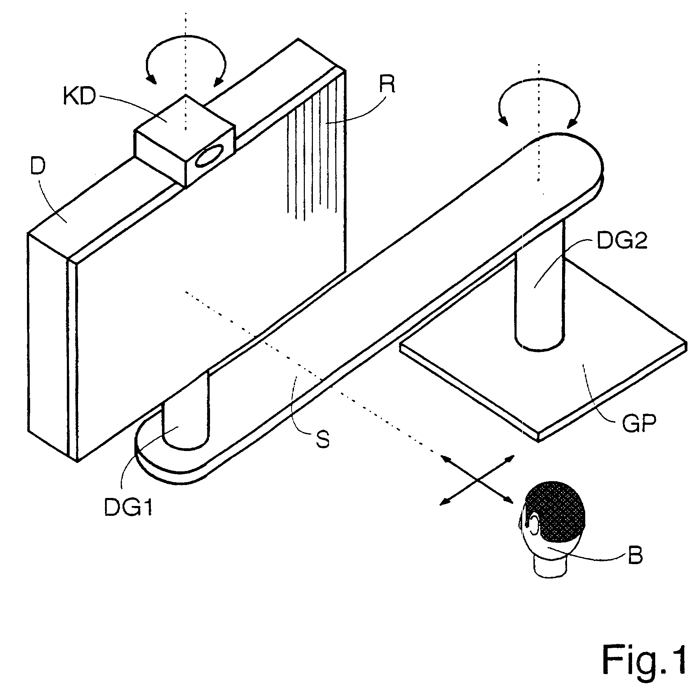

Der in Fig. 1 schematisch auf einem horizontal angeordneten Schwenkarm dargestellte Flachbildschirm ist eine Flüssigkristalf-Anzeige D mit feinem Linsenraster **R** in Querformat (3 : 4) mit einer Bildschirmdiagonale von z.B. 330 mm (13 inches) und einer Auflösung von z.B. 1024 x 768. Das Kopidetektionssystem **KD** erfaßt ständig die Kopfposition des Betrachters **B.** Diese Daten werden in einem - hier nicht dargestellten - Regler derart verarbeitet, daß die Sollposition des Flachbildschirms **FB** eingestellt wird, bei der immer garantiert ist, daß der Betrachter sich in dem Bereich befindet, in dem die durch den Linsenrasterbildschirm örtlich getrennten Bildstrahlen der linken und rechten Stereoteilbilder zur Bildtrennung die Pupillen der Augen treffen werden. Der Bildschirm ist in diesem sowie in den folgenden Ausführungsformen gemäß der Erfindung auf Mitteln zum Nachführen angeordnet, so daß dieser lateral und frontal korrespondierend mit den Bewegungen des Kopfes verfahren wird unter Beibehaltung der erwähnten Bedingung, getrennte Stereoteilbilder zu erzeugen und deren Bildstrahlen nachzuführen.

Der in Fig. 1 dargestellte, eingliedrig horizontale Schwenkarm **S** mit zwei Drehgelenken **DG1, DG2** ermöglicht das Nachführen des Flachbildschirmes **FB**; gebildet aus Flüssigkistall-Anzeige **D** und Linsenraster **R**, durch zwei rotatorische Bewegungen.

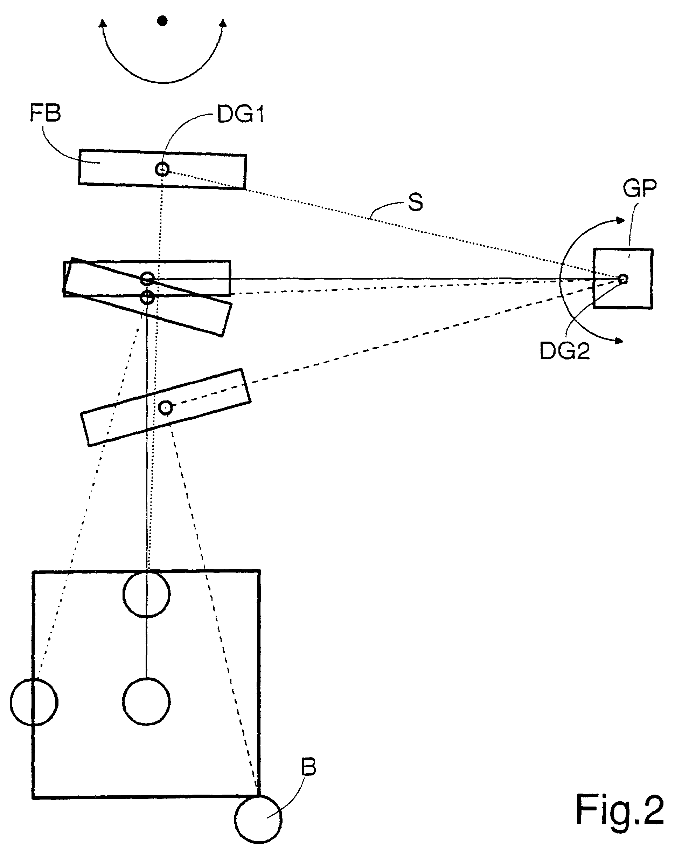

In Fig. 2 sind die möglichen Nachführpositionen des Flachbildschirms **FB** dargestellt, wenn sich der Betrachter **B** in dem ebenfalls eingezeichneten Bereich bewegt. Der Flachbildschirm **FB** befindet sich auf einem horizontalen Schwenkarm **S** gem. Fig 1 und ist mit einer Grundplatte **GP** verbunden ist, wenn sich der Betrachter **B** in dem ebenfalls eingezeichneten Bereich bewegt.

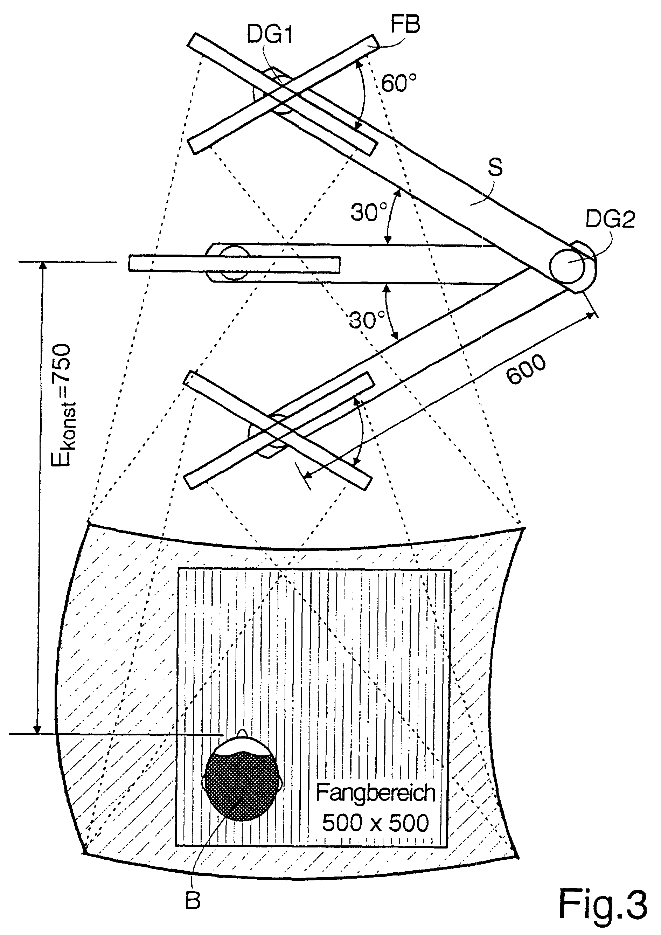

Fig. 3 macht die Bewegungsmöglichkeit eines Betrachters deutlich, bei der durch das Nachführen des Flachbildschirms **FB** immer ein konstanter Abstand **E** zwischen Betrachter **B** und Flachbildschirm **FB** und eine konstante Ausrichtung des Flachbildschirms zum Betrachter **B** ermöglicht wird. Ist das Drehgelenk **DG2** (Grundplatte **GP**/Schwenkarm **S**) für eine Drehung des Schwenkanns **S** von ±30°, das Drehgelenk **DG1** (Flachbildschirm **FB**/Schwenkarm **S**) für eine Drehung von = 24° bei einer Länge des horizontalen Schwenkarms von 600 mm ausgefegt, so kann sich der Betrachter in einem lateralen Bereich von 500 mm und in einem frontalen Bereich von 500 mm bewegen, und durch das Nachführen des Bildschirms **FB** wird immer ein Abstand von E = 750 mm eingehalten.

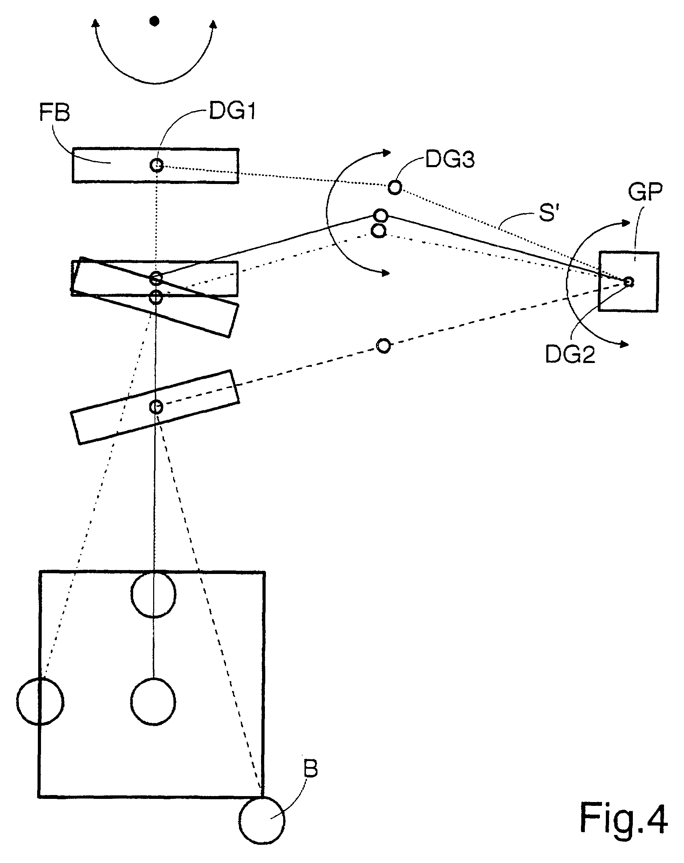

Der in Fig. 4 dargestellte zweigliedrige horizontale Schwenkarm **S'** garantiert die in entsprechenden Bereichen geforderte Nachführung des Flachbildschirm **FB** über die drei Drehgelenke **DG1, DG2, DG3**. Drehgelenk **DG1** verbindet die Grundplatte **GP** mit dem ersten Glied des Schwenkarms **S'**, Drehgelenk **DG2** ermöglicht die Drehung des Flachbildschirms **FB** bezüalich des zweiten Gliedes des Schwenkarms **S'** und Drehgelenk **DG 3** die Drehung der beiden Glieder des Schwenkarms **S'** zueinander. Damit ist wieder ein lateraler und ein frontaler Bereich garantiert, indem sich der Betrachter bewegen kann.

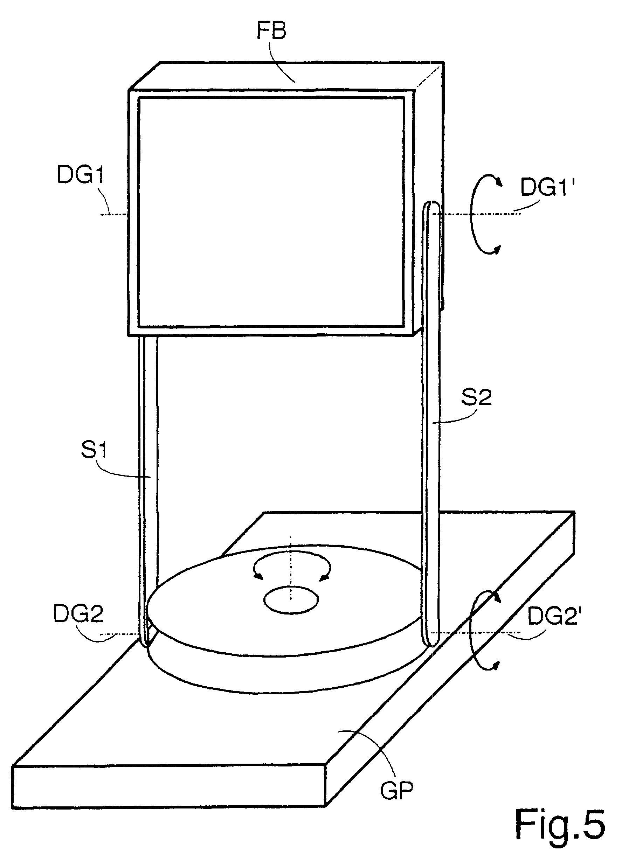

In der Fig. 5 ist ein Flachbildschirm **FB** dargestellt, der drehbar zwischen zwei vertikalen Schwenkarmen **S1, S2** "aufgehängt" ist. Die beiden Schwenkarme **S1, S2** sind über je ein weiteres Drehgelenk **DG2, DG2'** mit der Grundplatte **GP** verbunden, die selbst drehbar ausgebildet ist. Damit wird der Flachbildschirm **FB** durch drei rotatorische Bewegungen in zwei zueinander senkrechten Ebenen der Bewegung des Betrachters nachgeführt.

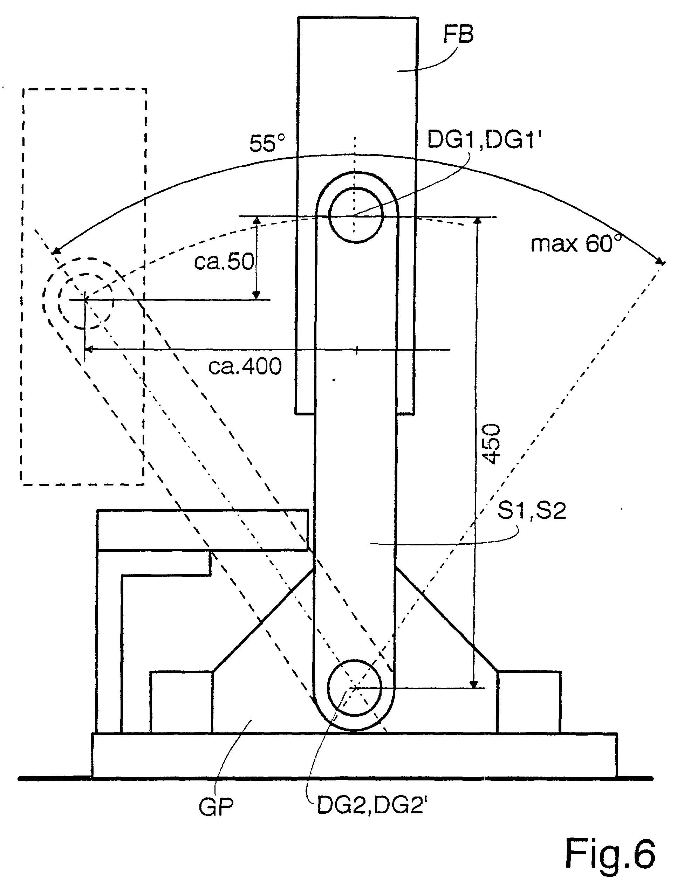

in Fig. 6 ist eine konkrete Ausführung gemäß Fig. 5 in der Seitenansicht in zwei Positionen des Schwenkarmpaares gezeigt. Hierbei beträgt die Länge der vertikalen Schwenkarme **S1** und **S2** je 450 mm. Wenn sich das Paar Schwenkarme **S1, S2** mittels der Drehgelenke **DG2, DG2'** um einen Winkel von 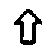 27,5 ° (max. 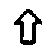 30 °) von der Vertikalen entfernt, kann ein Betrachter seinen Entfernungsabstand bis zu 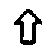 200 mm verändern.

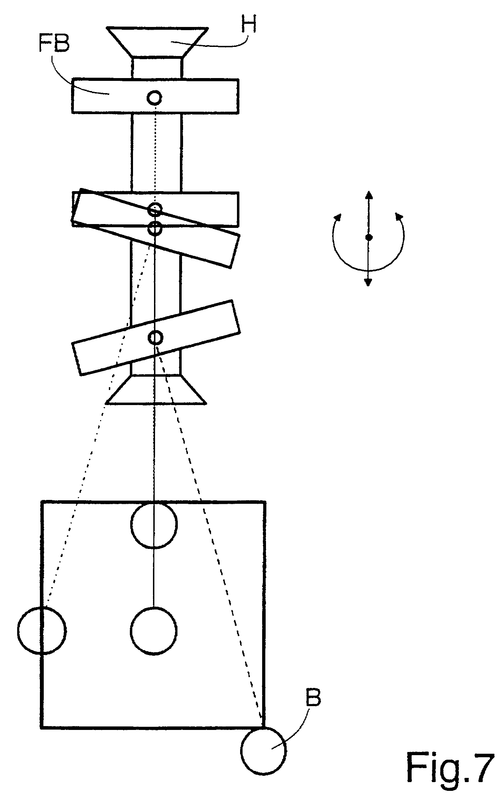

Die in Fig. 7 dargestellte Ausführung der Erfindung zeigt eine horizontale Schiene **H**, auf der der Flachbildschirm **FB** linear beweglich und drehbar angeordnet ist. Durch die Realisierung einer rotatorischen und einer translatorischen Bewegung des Flachbildschirms **FB** kann sich der Betrachter **B** wieder in einem größeren Bereich bewegen unter Beibehaltung seiner zentralen Position zum Flachbildschirm **FB**.

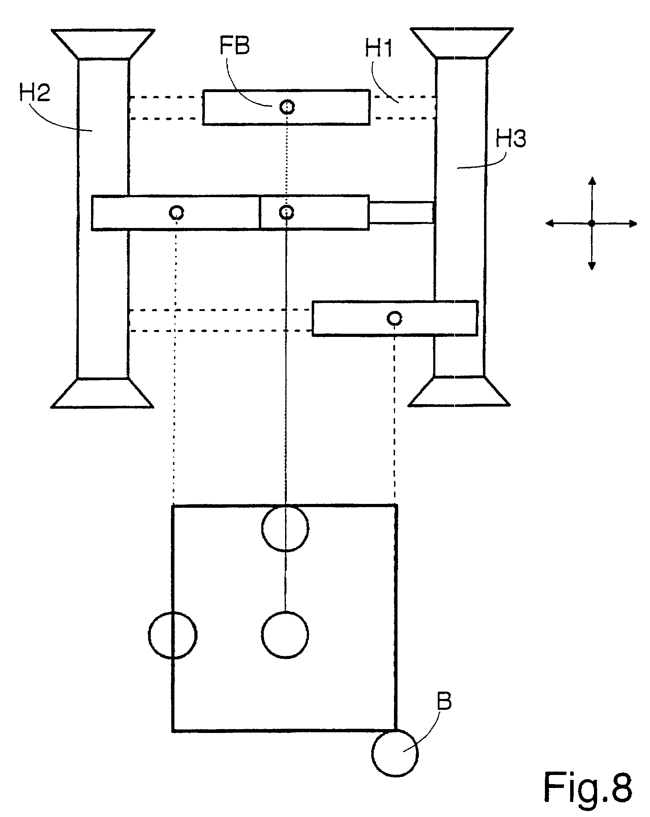

Einige der möglichen Positionen in den Bewegungsabläufen eines Flachbildschirms **FB,** der sich auf einer horizontalen Schiene **H1** befindet, die senkrecht zu einem Paar horizontaler, paralleler Schienen **H2, H3** angeordnet ist, sind in Fig. 8 dargestellt. Durch zwei translatorische Bewegungen des Flachbildschirms **FB,** ähnlich einem x-y-Tisch, steht dem Betrachter **B** wieder ein größerer - auch in dieser Figur eingezeichneter - Bewegungsraum zur Verfügung.

## Patentansprüche

1. Vorrichtung zum Nachführen eines autostereoskopischen Flachbildschirms, aufweisend einen Flachbildschirm, ein Detektionssystem, das die Kopfposition des Betrachters in Bezug auf die Flachbildschirmebene bestimmt, einen Regler, der die gemessenen Daten verarbeitet, und mindestens einen Antrieb, auf den der Regler diese Daten überträgt und der den Flachbildschirm den Kopfbewegungen des Betrachters nachführt,
**dadurch gekennzeichnet, daß**
der Flachbildschirm (FB) als Einheit aus einem Linsenraster (R) mit extrem kleinen Linsenpitches von optimal korrigierter Linsenstruktur und einem Fiachbild-Anzeigemodul (D) gebildet ist und der Antrieb zum Nachführen des Flachbildschirms ein mehrstufiges Gelenkgetriebe ist, das translatorische und/oder rotatorische Bewegungen ausführt und den Flachbildschirm (FB) bei einer Kopfbewegung des Betrachters (B) in konstanter Betrachtungsentfernung und konstantem Betrachtungswinkel nachführt.

2. Vorrichtung nach Anspruch 1,
**dadurch gekennzeichnet, daß**
das Gelenkgetriebe als Gelenkglieder einen eingliedrigen horizontalen Schwenkarm (S) mit zwei Drehgelenken (DG1, DG2) aufweist, wobei ein Drehgelenk (DG1) den horizontalen Schwenkarm (S) mit dem Flachbildschirm (FB) und das andere Drehgelenk (DG2) eine um 180° bezüglich des Flachbildschirms (FB) versetzt angeordnete Grundplatte (GP) mit dem horizontalen Schwenkarm (S) drehbar verbindet.

3. Vorrichtung nach Anspruch 1,
**dadurch gekennzeichnet, daß**
das Gelenkgetriebe als Gelenkglieder einen zweigliedrigen horizontalen Schwenkarm (S) mit drei Drehgelenken (DG1; DG2, DG3) aufweist, wobei ein äußeres Drehgelenk (DG2) den horizontalen Schwenkarm (S) mit dem Flachbildschirm (FB), das andere äußere Drehgelenk (DG1) eine um 180° bezüglich des Flachbildschirms (FB) versetzt angeordnete Grundplatte (GP) mit dem horizontalen Schwenkarm (S) und das mittlere Drehgelenk (DG3) die beiden Glieder des horizontalen Schwenkarms (S) drehbar miteinander verbindet.

4. Vorrichtung nach Anspruch 1,
**dadurch gekennzeichnet, daß**
das Gelenkgetriebe als Gelenkglieder ein Paar vertikaler, eingliedriger, parallel zueinander angeordneter Schwenkarme (S1, S2) aufweist, wobei je ein Ende der beiden Schwenkarme (S1, S2) mit je einer Seitenfläche des Flachbildschirms (FB) drehbar verbunden ist und das jeweils andere der Ende des Paares vertikaler Schwenkarme (S1, S2) mit einer drehbar ausgebildeten, horizontal angeordneten, scheibenförmigen Grundplatte (GP) drehbar hängend oder stehend verbunden ist.

5. Vorrichtung nach Anspruch 1,
**dadurch gekennzeichnet, daß**
das Gelenkgetriebe als Gelenkglieder eine als Schubgelenk ausgebildete, horizontal angeordnete Schiene (H) aufweist, mit der der Flachbildschirm (FB) drehbar verbunden ist.

6. Vorrichtung nach Anspruch 1,
**dadurch gekennzeichnet, daß**
das Gelenkgetriebe als Gelenkglieder ein Paar als Schubgelenk horizontal und parallel zueinander angeordnete Schienen (H2, H3) aufweist, daß als senkrecht zu diesem Paar Schienen bewegliches Schubgelenk eine Einzelschiene (H1), die in dem Paar angeordneter Schienen (H2, H3) senkrecht zu diesen geführt ist, ausgebildet ist, wobei die Einzelschiene (H1) als Schubgelenk für den Flachbildschirm (FB) ausgebildet ist, der auf der Einzeischiene angeordnet ist.

7. Vorrichtung nach Anspruch 6,
**dadurch gekennzeichnet, daß**
der Flachbildschirm (FB) auf der Einzelschiene (H1) drehbar angeordnet ist.

8. Vorrichtung nach Anspruch 1,
**dadurch gekennzeichnet, daß**
das Flachbild-Anzeigemodul (D) eine Flüssigkristall-Anzeige ist.

9. Vorrichtung nach Anspruch 1,
**dadurch gekennzeichnet, daß**
das Flachbild-Anzeigemodul (D) eine Plasma-Anzeige ist.

10. Vorrichtung nach Anspruch 1,
**dadurch gekennzeichnet, daß**
das Flachbild-Anzeigemodul (D) eine Elektrolumineszenz-Anzeige ist.

11. Vorrichtung nach Anspruch 1,
**dadurch gekennzeichnet, daß**
das Linsenraster (R) direkt auf dem Flachbild-Anzeigemodul (D) aufgebracht ist.

12. Vorrichtung nach Anspruch 11,
**dadurch gekennzeichnet, daß**
das Linsenraster (R) mit der strukturierten Fläche zum Fiachbild-Anzeigemodul (D) hin auf diesem angeordnet ist.

13. Vorrichtung nach Anspruch 11,
**dadurch gekennzeichnet, daß**
das Linsenraster (R) mit der strukturierten Fläche auf dem Flachbild-Anzeigemodul (D) zum Betrachter hin angeordnet ist.

14. Vorrichtung nach Anspruch 1,
**dadurch gekennzeichnet, daß**
die Pixelstruktur des Flachbild-Anzeigemoduls (D) als Referenzsystem zur Erzeugung der Linsenstruktur (R) ausgebildet ist.

15. Vorrichtung nach mindestens einem der vorangehenden Ansprüche,
**dadurch gekennzeichnet, daß**
das mehrstufige Gelenkgetriebe den Flachbildschirm bei Bewegung des Betrachters in konstantem Betrachtungsabstand nachführt und das Linsenraster derart ausgebildet ist, daß es zusätzlich bei seitlicher Bewegung parallel zum Flachdisplay verfahren wird.

## Claims

1. Tracking device of an autostereoscopic flat display screen, comprising a flat display screen, a detection system that determines the head position of the viewer with respect to the plane of the flat display screen, a controller that processes the measured data and at least one drive to which the controller transmits said data and that causes the flat display screen to track the head movements of the viewer, **characterized in that** the flat display screen (FB) is formed as a unit comprising a lenticular screen (R) with extremely small line pitches of optimally corrected lenticular structure and a flat-image display module (D) and the tracking drive of the flat display screen is a multistage link mechanism that executes translatory and/or rotational movements and, in the event of a head movement of the viewer (B), causes the flat display screen (FB) to track with a constant viewing distance and a constant viewing angle.

2. Device according to Claim 1, **characterized in that** the link mechanism comprises, as link members, a single-member horizontal swivelling arm (S) having two rotating joints (DG1, DG2), wherein one rotating joint (DG1) rotatably joins the horizonal swivelling arm (S) to the flat display screen (FB) and the other rotating joint (DG2) rotatably joins a base plate (GP) to the horizontal swivelling arm (S), said base plate being displaced through 180° with respect to the flat display screen (FB).

3. Device according to Claim 1, **characterized in that** the link mechanism comprises, as link members, a two-member horizonal swivelling arm (S) having three rotating joints (DG1; DG2, DG3), wherein an outer rotating joint (DG2) joins the horizontal swivelling arm (S) to the flat display screen (FB), the other outer rotating joint (DG1) joins a base plate (GP) to the horizonal swivelling arm (S), said base plate being displaced through 180° with respect to the flat display screen (FB), and the central rotating joint (DG3) rotatably joins the two members of the horizontal swivelling arm (S) together.

4. Device according to Claim 1, **characterized in that** the link mechanism comprises, as link members, a pair of vertical, one-member swivelling arms (S1, S2) disposed in parallel with respect to one another, wherein one end of each of the two swivelling arms (S1, S2) is rotatably joined in each case to a side face of the flat display screen (FB) and the other end of each of the pair of vertical swivelling arms (S1, S2) is rotatably joined in a standing or suspended manner to a horizontally disposed, disc-shaped base plate (GP) of rotatable design.

5. Device according to Claim 1, **characterized in that** the link mechanism comprises, as link members, a horizontally disposed bar (H) that is designed as a sliding link and to which the flat display screen (FB) is rotatably joined.

6. Device according to Claim 1, **characterized in that** the link mechanism comprises, as link members, a pair of bars (H1, H2) disposed horizontally and parallel to one another as sliding links, and **in that** a single bar (H1) that is movable with respect to said pair as a sliding link and that is directed in the pair of disposed bars (H2, H3) vertically with respect to the latter, wherein the single bar (H1) is designed as sliding link for the flat display screen (FB), which is disposed on the single bar.

7. Device according to Claim 6, **characterized in that** the flat display screen (FB) is rotatably disposed on the single bar (H1).

8. Device according to Claim 1, **characterized in that** the flat-screen display module (D) is a liquid-crystal display.

9. Device according to Claim 1, **characterized in that** the flat-screen display module (D) is a plasma display.

10. Device according to Claim 1, **characterized in that** the flat-screen display module (D) is an electroluminescent display.

11. Device according to Claim 1, **characterized in that** the lenticular screen (R) is mounted directly on the flat-screen display module (D).

12. Device according to Claim 11, **characterized in that** the lenticular screen (R) is disposed with the structured face towards the flat-screen display module (D).

13. Device according to Claim 11, **characterized in that** the lenticular screen (R) is disposed on the flat-screen display module (D) with the structured face towards the viewer.

14. Device according to Claim 1, **characterized in that** the pixel structure of the flat-screen display module (D) is designed as reference system for generating the lenticular structure (R).

15. Device according to at least one of the preceding claims, **characterized in that** the multistage link mechanism causes the flat display screen to track the viewer at a constant viewing distance and that the lenticular screen is designed in such a way that, in addition, it is moved parallel to the flat display in the event of a lateral movement.

## Revendications

1. Dispositif d'orientation automatique d'un écran plat autostéréoscopique comprenant un écran plat, un système de détection qui détermine la position de la tête du spectateur par rapport au plan de l'écran plat, un moyen de régulation qui traite les données mesurées et au moins un moyen d'entraînement recevant les données du régulateur et orientant l'écran plat en fonction des mouvements de la tête du spectateur,
**caractérisé en ce que**
l'écran plat (FB) est un ensemble formé d'une trame de lentilles (R) avec des pas de lentilles extrêmement petits d'une structure de lentilles à correction optimale et d'un module d'affichage d'écran plat (D) et l'entraînement pour asservir l'écran plat est une transmission articulée à plusieurs niveaux effectuant des mouvements de translation et/ou de rotation pour orienter l'écran plat (FB) mimant les mouvements de la tête du spectacle (B), pour conserver une distance d'éloignement constante et un angle de vue constant pour le spectacle.

2. Dispositif selon la revendication 1,
**caractérisé en ce que**
la transmission articulée comporte comme organe d'articulation, un bras pivotant (S) horizontal à un élément relié à deux articulations de rotation (DG1, DG2),
une articulation (DG1) reliant le bras pivotant horizontal (S) à l'écran (FB) et l'autre articulation (DG2) reliant une plaque de base (GP), décalée par rapport à l'écran image (FB) de 180°, au bras pivotant (S) horizontal.

3. Dispositif selon la revendication 1,
**caractérisé en ce que**
la transmission articulée comporte comme élément d'articulation un bras pivotant (S) horizontal à deux éléments et trois articulations (DG ; DG2, DG3),
une articulation extérieure (DG2) reliant le bras pivotant horizontal (S) à l'écran plat (FB) et l'autre articulation (DG1) extérieure reliant une plaque de base (GP) installée de manière décalée de 180° par rapport à l'écran plat (FB), au bras pivotant horizontal (S) et l'articulation de rotation, moyenne, (DG3) relie entre eux en rotation, les deux éléments du bras pivotant horizontal (S).

4. Dispositif selon la revendication 1,
**caractérisé en ce que**
la transmission articulée comporte comme élément d'articulation une paire de bras (S1, S2) pivotant en une seule partie, parallèles, verticaux, une extrémité respective des deux bras pivotants (S1, S2) est reliée en rotation à chaque surface latérale de l'écran plat (FB) et l'autre extrémité de la paire de bras pivotants verticaux (S1, S2) est reliée debout ou suspendue, à rotation à une plaque de base (GP), en forme de disque, horizontal, rotatif.

5. Dispositif selon la revendication 1,
**caractérisé en ce que**
la transmission articulée comporte comme élément d'articulation un rail (11) horizontal et fonctionnant comme articulation poussée, reliée en rotation à l'écran plat (FB).

6. Dispositif selon la revendication 1,
**caractérisé en ce que**
la transmission articulée comporte comme élément d'articulation une paire de rails (H2, H3) constituant une articulation poussée, ces rails étant horizontaux et parallèles,
une articulation poussée, mobile, perpendiculairement à cette paire de rails, comporte un rail simple (H1) prévu dans la paire de rails (H2, H3) perpendiculairement à ceux-ci qui le guident, et le rail simple (H1) est réalisé comme articulation poussée pour l'écran plat (FB), celui-ci étant installé sur le rail simple.

7. Dispositif selon la revendication 6,
**caractérisé en ce que**
l'écran plat (FB) est monté à rotation sur le rail simple (H1).

8. Dispositif selon la revendication 1,
**caractérisé en ce que**
le module d'affichage (D) de l'écran plat est un afficheur à cristaux liquides.

9. Dispositif selon la revendication 1,
**caractérisé en ce que**
le module d'affichage à écran plat (D) est un afficheur à plasma.

10. Dispositif selon la revendication 1,
**caractérisé en ce que**
le module d'affichage à écran plat (D) est un afficheur à électroluminescence.

11. Dispositif selon la revendication 1,
**caractérisé en ce que**
la trame de lentilles (R) est appliquée directement sur le module d'affichage de l'écran plat (D).

12. Dispositif selon la revendication 11,
**caractérisé en ce que**
la trame de lentilles (R) est montée avec la surface structurée par rapport au module d'affichage image, plat (D) sur celui-ci.

13. Dispositif selon la revendication 11,
**caractérisé en ce que**
la trame de lentilles (R) est installée avec la surface structurée sur le module d'affichage à écran plat (D) tourné vers le spectateur.

14. Dispositif selon la revendication 1,
**caractérisé en ce que**
la structure des pixels du module d'affichage à écran plat (D) est réalisée comme système de référence pour générer la structure de lentille (R).

15. Dispositif selon au moins l'une quelconque des revendications précédentes,
**caractérisé par**
des transmissions articulées à plusieurs étages pour l'écran plat, qui lors des mouvements de l'observateur, est asservi à une distance d'observation constante et la trame de lentilles se déplace en plus par rapport à l'afficheur plat, en parallèle à celui-ci lors des mouvements latéraux.
